# FASCICULE DE BREVET EUROPEEN

(11) **EP 3 197 717 B1**
(45) Date de publication et mention de la délivrance du brevet: **07.09.2022**
(21) Numéro de dépôt: 15770578.1
(22) Date de dépôt: 14.09.2015
(51) Int. Cl.: B60Q 1/26, B60Q 1/28, B60Q 1/12, B60Q 1/18

(54) **VEHICULE AUTOMOBILE COMPORTANT UN DISPOSITIF DE SIGNALISATION A EQUIPAGE MOBILE**
KRAFTFAHRZEUG MIT EINER SIGNALISIERUNGSVORRICHTUNG MIT BEWEGLICHER ANORDNUNG
MOTOR VEHICLE COMPRISING A SIGNALLING DEVICE WITH MOVING ASSEMBLY

(30) Priorité: 26.09.2014 FR 1459100
(43) Date de publication de la demande: 02.08.2017
(73) Titulaire: PSA Automobiles SA, 78300 Poissy (FR)
(72) Inventeur: GONCALVES, Whilk Marcelino, F-75013 Paris (FR); LE DALL, Christophe, F-92150 Suresnes (FR); GACOIN, Nicolas, F-91380 Chilly Mazarin (FR)
(86) Numéro de dépôt international: PCT/FR2015/052447
(87) Numéro de publication internationale: WO 2016/046468

(56) Documents cités:
- EP-A1- 1 659 028
- EP-A1- 2 221 219
- DE-A1-102011 000 840
- FR-A1- 2 871 421
- JP-A- 2001 001 832
- KR-A- 20130 037 346
- US-A1- 2005 180 139
- US-A1- 2008 198 617

## Description

L'invention a trait au domaine de l'éclairage et/ou de signalisation des véhicules automobile. Elle concerne, plus précisément, un véhicule automobile comportant un dispositif de signalisation à équipage mobile.

Sur les véhicules modernes tendent à se généraliser des dispositifs permettant d'agrémenter l'éclairage de sorte à en améliorer l'efficacité, la portée, l'esthétique, ou encore pour limiter l'éblouissement des tiers.

En particulier, depuis quelques années, un nombre croissant de véhicules ont été équipés de feux de circulation diurnes, plus généralement connus sous l'acronyme anglo-saxon DRL (Daytime Runing Lamp) destinés à accroître la visibilité du véhicule et qui s'éclairent automatiquement à la mise au contact.

La réglementation ECE R87 et ECE R48 §6.19 impose que les distributions lumineuses engendrées par les DRL puissent couvrir des distributions angulaires minimales dans l'espace afin que le véhicule et ses déplacements soient visibles par les autres acteurs de la route sur la route en plein jour.

Cette fonction d'éclairage DRL doit se distinguer des autres fonctions d'éclairage, prévues pour être activées dans des conditions extérieures de luminosité faible, et être activée en permanence en plein jour.

La technologie LED apporte un solution organique appropriée pour obtenir un bon compromis entre durée de vie et souplesse du design.

La fonction DRL est une fonction de signalisation avec une grille photométrique spécifiée par la réglementation. En particulier la distribution lumineuse du DRL est centrée dans l'axe principal du véhicule. Cette fonction de signalisation a des intensités lumineuses sensiblement plus faibles que pour les fonctions d'éclairages telles que les feux de route ou de croisement.

Les feux de circulation DRL à l'avant du véhicule, sont traditionnellement des organes statiques dépourvus de mouvements de rotation et/ou de translation.

De tels organes sont notamment décrits dans le document EP1659028.

Des feux directifs ont été proposés, qui permettent par exemple d'éclairer les bas-côtés de la route ou d'adapter la direction principale d'éclairage aux changements de direction du véhicule.

On connaît ainsi du document EP1659028 un dispositif (3) d'éclairage comportant au moins deux modules d'éclairage adjacents, et un organe de commande apte à commander indépendamment chacun des deux modules d'éclairage en fonction de l'angle de braquage du volant de direction du véhicule.

Un tel dispositif, permet de procurer un éclairage de route adaptatif selon les conditions de roulage, mais il n'est pas conçu pour procurer un éclairage de signalisation dynamique.

Le document FR2871421 A1 montre un système d'éclairage de véhicule adapté à commander la configuration de distribution de lumière par modification indépendante de l'orientation d'une pluralité de sources de lumière.

Un objectif de la présente invention est de proposer des feux de circulation diurne (DRL) pourvus de mouvement de rotation (dynamiques) qui respectent les grilles photométriques réglementaires tout en améliorant les conditions de visibilité desdits feux par les autres usagers de la route, en dehors de l'axe longitudinal du véhicule.

Un autre objectif est de proposer un éclairage de signalisation continu et homogène, sans tâche d'ombre, durant tout le mouvement de rotation des feux.

A cet effet, la présente invention propose un véhicule d'après la revendication 1.

Selon une autre caractéristique, le véhicule comporte en outre au moins une première source lumineuse secondaire adjacente à la deuxième source lumineuse secondaire et adjacente à la source d'éclairage principale, et dont l'intensité est commandée par l'organe de commande pour contribuer à la formation du faisceau global homogène et continu quand le véhicule tourne, et pour respecter le niveau d'intensité lumineuse requis par la réglementation en matière de feux de signalisation dans l'axe longitudinal du véhicule.

Selon une caractéristique, la première source lumineuse est statique quand le véhicule tourne.

Selon une autre caractéristique, les deuxième et troisième sources lumineuses tournent à des vitesses différentes et comportent des butées angulaires différentes et en ce que l'intensité lumineuse de chaque première, deuxième et troisième sources lumineuses, dans leurs directions principales respectives, est ajustée en fonction de la grille photométrique réglementaire en matière de feux de signalisation.

Selon une autre caractéristique, la fonction de signalisation est une fonction de feux diurnes.

Selon une autre caractéristique, l'angle de rotation de la deuxième source lumineuse secondaire par rapport à la direction de ladite deuxième source lumineuse quand le rayon de braquage du volant est nul, varie de 0° à 8° quand l'angle de braquage du volant varie de 0° à 360° tandis que l'angle de rotation de la troisième source lumineuse secondaire par rapport à la direction de ladite troisième source lumineuse quand le rayon de braquage du volant est nul, varie de 0° à 15° quand l'angle de braquage du volant vare de 0° à 540°, tandis que l'intensité de la première source lumineuse varie de manière linéaire de 135 à 400 cd quand l'angle de braquage du volant varie de 0° à 20°, que l'intensité lumineuse de la deuxième source lumineuse varie de manière linéaire de 135 cd à 400 cd quand l'angle de braquage du volant (V) varie de 0° à 360° et que l'intensité lumineuse de la troisième source lumineuse varie de manière linéaire de 135 cd à 400 cd quand l'angle de braquage du volant varie de 0° à 540°.

D'autres objets et avantages de l'invention apparaîtront à la lumière de la description d'un mode de réalisation, faite ci-après en référence aux dessins annexés dans lesquels :
- la figure 1 est une vue en perspective montrant un véhicule automobile équipé d'un projecteur avant droit intégrant un dispositif d'éclairage mobile selon l'invention ;
- la figure 2 est une section dans le plan horizontale XY, schématique, en vue de dessus, illustrant le dispositif d'éclairage mobile selon l'invention comportant trois modules mobile en rotation autour de l'axe Y ;
- la figure 3 est un premier diagramme illustrant des lois de commande de la rotation des modules en fonction de l'angle volant ;
- la figure 4 est un deuxième diagramme illustrant des lois de commande de l'intensité de chaque module en fonction de l'angle volant ; et
- la figure 5 est un troisième diagramme similaire au premier diagramme de la figure 3, illustrant d'autres lois de commande de la rotation des modules en fonction de l'angle volant.

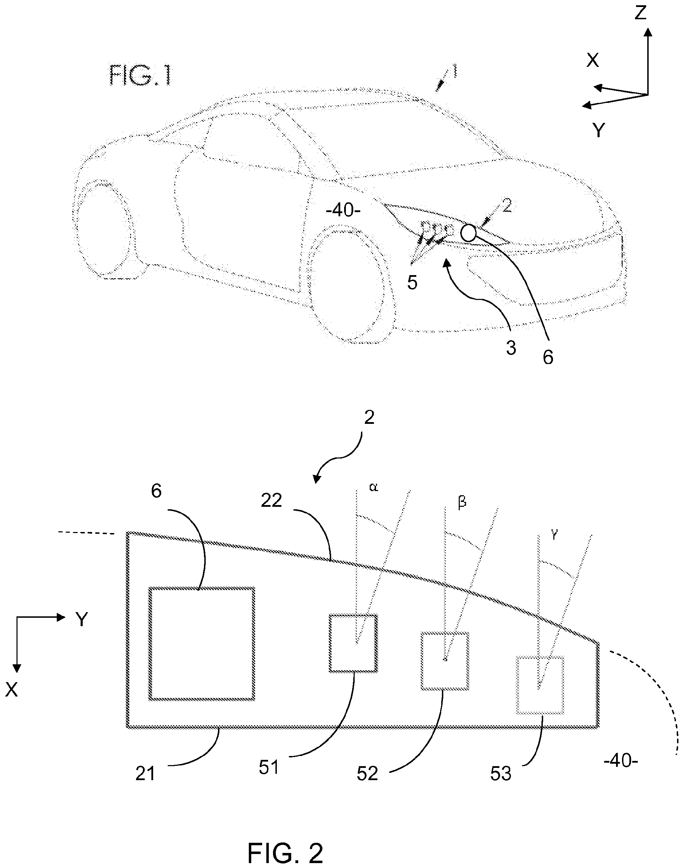

Sur la figure 1 est représenté un véhicule 1 automobile équipé, sur une face avant, d'au moins un projecteur 2 intégrant au moins un dispositif 3 d'éclairage.

On définit par rapport au véhicule 1 (et donc par rapport au projecteur 2) un repère orthogonal XYZ comprenant trois axes perpendiculaires deux à deux, à savoir :
- un axe X, définissant une direction longitudinale, horizontale, confondue avec la direction générale de déplacement du véhicule 1,
- un axe Y, définissant une direction transversale, horizontale, qui avec l'axe X définit un plan XY horizontal,
- un axe Z, définissant une direction verticale, perpendiculaire au plan XY horizontal.

Le projecteur 2 comporte un boîtier 21 dont la face 22 externe comporte une courbure déterminée pour former avec les parties de carrosserie avoisinantes 4 (capot et aile) une continuité de forme contribuant à l'esthétisme de la face avant du véhicule 1.

Le dispositif 3 d'éclairage est agencé à l'intérieur du projecteur pour adopter plusieurs configurations d'éclairage.

Le dispositif 3 d'éclairage comprend à cet effet, un équipage 5 mobile autour d'axes parallèles orientés en Z et comprend un module d'éclairage principal statique 6 assurant le niveau d'intensité réglementaire suivant l'axe longitudinal X du véhicule 1.

L'équipage 5 mobile comprend trois modules 51, 52 et 53 de signalisation aptes à se déplacer en rotation autour de leurs axes de rotation respectifs parallèles suivant Z.

Les trois modules 51, 52 et 53 sont disposés à proximité de l'aile avant droite 40 du véhicule 1 (à droite du module d'éclairage principal 6, on considérant le projecteur avant droit 2 de la figure 2).

Ils sont disposés à égale distance les uns des autres à l'intérieur du projecteur 2 et leurs axes de rotation respectifs parallèles entre eux suivant Z, sont alignés suivant un arc de cercle dont le rayon correspond sensiblement au rayon de courbure de la face externe 22 du projecteur 2 : le premier module référencé 51 est celui qui est le plus proche du module d'éclairage principal 6 fixe et le troisième module référencé 53 est celui qui en est le plus éloigné ; le deuxième module référencé 52 est disposé entre les premier 51 et troisième module 53.

Les trois modules 51, 52 et 53 sont tous orientés dans la même direction qui est la direction suivant l'axe longitudinal du véhicule (suivant X) , quand le véhicule est en ligne droite (angle de braquage nul : les roues motrices sont orientées parallèlement à l'axe longitudinal du véhicule)

Chaque module de signalisation 51, 52 et 53 comprend de manière connue, et non représentée, une source lumineuse dite secondaire comportant une ou plusieurs diode(s) électroluminescente(s) ou LED, une optique comprenant une monture et une lentille solidaire de la monture. La lentille est réalisée dans un matériau transparent. Il s'agit de préférence d'une matière plastique synthétique, par exemple un polyacrylate, qui offre l'avantage d'offrir de bonnes propriétés optiques (notamment une bonne transparence) et mécaniques (notamment une bonne rigidité).

Le module d'éclairage principal 6 comporte une source lumineuse dite principale, par exemple une ampoule à gaz (typiquement halogène ou au xénon), ou encore à diode(s) électroluminescente(s) ou LED.

Le système d'entraînement des modules 51, 52 et 53, non représenté, peut comprendre de manière connue, un mécanisme à base de bielle(s), cames et/ou d'engrenages, couplé aux modules 51, 52 et 53 pour assurer leur rotation de manière conjointe et complémentaire avec des vitesses de rotation différentes.

Le système d'entraînement comprend, en outre, une motorisation, couplée au mécanisme et commandée par un organe de commande OC, en fonction de l'angle de braquage du volant de direction V.

Les modules 51, 52 et 53 tournent à différentes vitesses et ont des butées angulaires α, β et γ différentes. Ces butées angulaires α, β et γ sont considérées comme étant respectivement, les extrémités des plages de variation angulaire maximales des modules 51, 52 et 53 par rapport à une direction parallèle à l'axe longitudinal (suivant X) du véhicule 1.

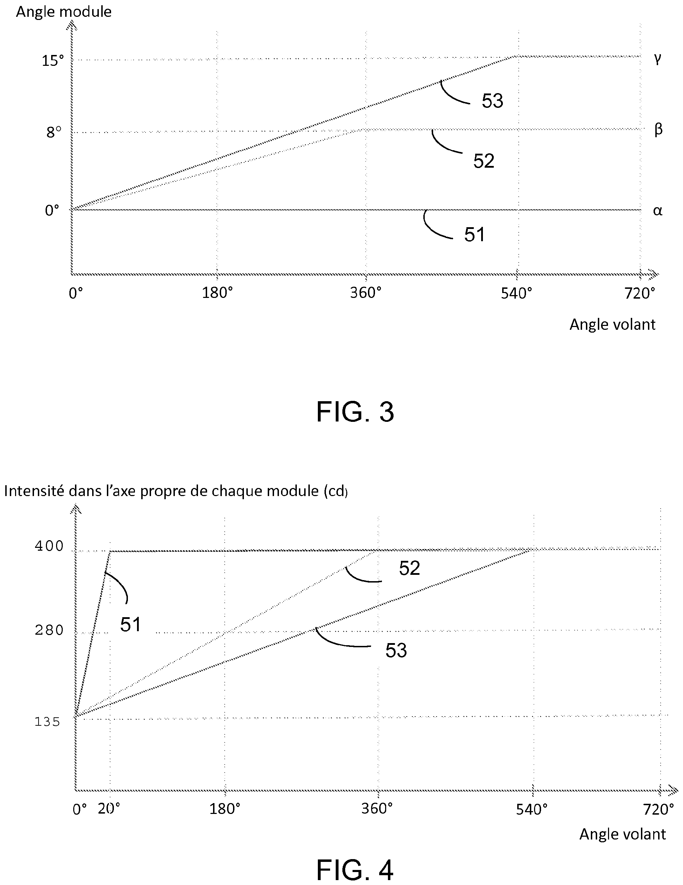

Au cours de ce déplacement, l'intensité relative des trois modules 51, 52 et 53 est commandée par des moyens électroniques de de l'organe de commande OC pour pouvoir respecter la grille photométrique réglementaire dans l'axe longitudinal du véhicule (suivant X) et vers les autres directions déterminées par des lois de commandes prédéfinies qui sont détaillées ci-après en référence aux figures 3 à 5.

La figure 3 est un premier diagramme illustrant un exemple de lois de commande de la rotation des modules 51, 52 et 53, selon l'invention, en fonction de l'angle de braquage du volant V.

Le module 51 reste statique dans une position angulaire fixe parallèle à la direction longitudinale X du véhicule 1 (α = 0°) afin d'assurer toujours le niveau d'intensité réglementaire dans l'axe longitudinal du véhicule 1.

La référence 0° de l'angle de braquage du volant V (angle de braquage nul) est considérée pour une configuration pour laquelle les roues directrices sont orientées selon l'axe longitudinal du véhicule 1 (suivant X).

Le diagramme représente l'évolution de l'angle de rotation de chaque module 51, 52 et 53, exprimé en degrés, en fonction de l'angle de braquage du volant V exprimé en degrés (360° correspondant à un tour complet du volant V).

Dans cet exemple, comme cité ci-dessus, le premier module 51 ne tourne pas tandis que les deuxième et troisième modules 52 et 53 entament une rotation évoluant de manière linéaire et indépendante (vitesse de rotation différente), en fonction de l'angle de braquage du volant jusqu' à un angle de braquage du volant de 360° (1 tour de volant) pour le deuxième module 52 et un angle de 540°(1,5 tour de volant) pour le troisième module 53.

Le deuxième module 52 s'arrête ainsi de tourner avant le troisième module 53.

Au-delà de leurs butées angulaires respectives β et γ, les deuxièmes et troisième modules 52 et 53 restent immobiles dans leurs positions angulaires maximales respectives alors que le volant V n'a pas encore atteint sa butée angulaire maximale.

Les lois de commande ainsi décrites permettent d'assurer une continuité du faisceau de signalisation perçu par les autres usagers de la route (autres véhicules et piétons) quand le véhicule V porteur desdits modules 51, 52 et 53 tourne.

Par continuité du faisceau, on entend un faisceau qui produit une tache lumineuse homogène, sans point noir, quand le véhicule tourne. Chaque module 51, 52 et 53 contribuant de manière conjointe à la formation du faisceau de signalisation global par complémentarité des faisceaux émis par chaque module 51, 52 et 53.

La figure 4 est un deuxième diagramme illustrant des lois de commande de l'intensité lumineuse de chaque module 51, 52 et 53, exprimée en candela (cd) en fonction de l'angle de braquage du volant V exprimé en degrés (360° correspondant à un tour complet du volant V).

En parallèle du braquage du volant V, et donc de la rotation des deuxième et troisième modules 52 et 53, les moyens électroniques de commande (non représentés) adaptent l'intensité lumineuse de chaque module 51, 52 et 53 dans l'axe principal du faisceau émis par le module 51, 52 et 53.

Selon l'exemple décrit, l'intensité du premier module 51 (qui ne tourne pas) varie de manière linéaire de 135 à 400 cd quand le volant V tourne d'un angle de 0° à 20°.

L'intensité lumineuse du deuxième module 52 varie quant à elle de manière linéaire de 135 cd à 400 cd quand le volant V tourne d'un angle de 0° à 360° (1 tour de volant V).

L'intensité lumineuse du troisième module 53 varie également de manière linéaire de 135 cd à 400 cd quand le volant V tourne d'un angle de 0° à 540° (1,5 tour de volant V).

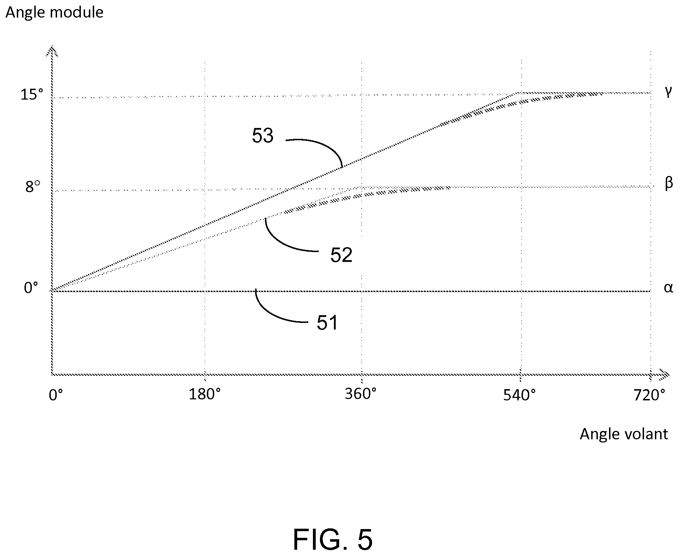

La figure 5 illustre un troisième diagramme, similaire au premier diagramme de la figure 3, dans lequel les transitions entre les comportements linéaires et la partie constante (asymptotique) pourront être progressives (lignes discontinues). Les courbes représentatives des lois de commande correspondantes sont définies par des équations possédant des paramètres ajustables de manière à présenter des points d'inflexion au niveau desdites transitions.

Cette progressivité permet une plus grande flexibilité dans la cinématique des modules 51, 52 et 53 à l'approche d'une intersection.

On réalise ainsi à partir de l'équipage mobile 5 décrit ci-dessus, et des lois de commandes également décrites ci-dessus, un feu de signalisation diurne DRL « dynamique » permettant d'optimiser la visibilité du véhicule par les piétons et autres véhicules dans l'environnement du véhicule porteur.

Le cône (amplitude angulaire) de visibilité -20°, +20° réglementaire est ainsi toujours respecté autour de l'axe ou direction principale orientée vers la cible (autre véhicule ou piéton). Ce cône de visibilité minimale est ainsi élargi avantageusement, afin d'augmenter les conditions de visibilité des feux de signalisation DRL.

Il est bien entendu compris que la description faite pour le projecteur avant droit et donc quand le volant V est tourné vers la droite, trouve son pendant pour le projecteur avant gauche donc quand le volant V est tourné vers la gauche.

Bien que la description faite ci-dessus, indique que les feux de signalisation sont des feux DRL, l'invention s'applique de la même manière et avec des lois similaires à d'autres feux de signalisation tels que les feux dits de position ou indicateur de changement de direction

## Revendications

1. Véhicule (1) comportant au moins une source d'éclairage principale (6) et au moins des deuxième (52) et troisième (53) sources lumineuses secondaires adjacentes, aptes à générer respectivement des faisceaux suivant des directions principales déterminées, et un organe de commande (OC) apte à commander l'intensité lumineuse de chacune des deuxième (52) et troisième (53) sources lumineuses secondaires en fonction de l'angle de braquage du volant de direction (V) du véhicule (1), chacune des deuxième (52) et troisième (53) sources lumineuses secondaires étant montée à rotation autour d'un axe perpendiculaire à la direction principale d'émission de leur faisceau, et émettant respectivement des faisceaux lumineux suivant des directions principales ajustables ; lesdites deuxième et troisième sources lumineuses respectant des lois de commande déterminées par l'organe de commande (OC) tant sur leurs intensités lumineuses respectives que sur leurs plages de rotation respectives (β, γ) pour former un faisceau global homogène et continu obtenu par complémentarité de leurs faisceaux quand le véhicule (1) tourne, **caractérisé en ce que** les angles de rotation des deuxième (52) et troisième (53) modules évoluent de manière linéaire et avec des vitesses de rotation différentes, en fonction de l'angle de braquage du volant ; les deuxième (52) et troisième (53) sources lumineuses secondaires remplissant une fonction de signalisation ; les deuxième module (52) et troisième module (53) ayant des butées angulaires (β, γ) différentes ; l'intensité lumineuse de chacune des deuxième (52) et troisième (53) sources lumineuses secondaires étant commandée par l'organe de commande (OC) pour respecter la grille photométrique réglementaire de la fonction de feux de signalisation sur toutes les plages de rotation (β, γ) des deuxième (52) et troisième (53) sources lumineuses secondaires.

2. Véhicule (1) selon la revendication précédente, **caractérisé en ce qu'**il comporte en outre au moins une première (51) source lumineuse secondaire adjacente à la deuxième (52) source lumineuse secondaire et adjacente à la source d'éclairage principale (6), et dont l'intensité est commandée par l'organe de commande (OC) pour contribuer à la formation du faisceau global homogène et continu quand le véhicule (1) tourne et pour respecter le niveau d'intensité lumineuse requis par la réglementation en matière de feux de signalisation dans l'axe longitudinal du véhicule (1).

3. Véhicule (1) selon la revendication précédente, **caractérisé en ce que** la première (51) source lumineuse est statique quand le véhicule (1) tourne.

4. Véhicule (1) selon la revendication précédente, **caractérisé en ce que** les deuxième (52) et troisième (53) sources lumineuses tournent à des vitesses différentes et comportent des butées angulaires différentes et **en ce que** l'intensité lumineuse de chaque première (51), deuxième (52) et troisième (53) sources lumineuses, dans leurs directions principales respectives, est ajustée en fonction de la grille photométrique réglementaire en matière de feux de signalisation.

5. Véhicule (1) selon la revendication précédente, **caractérisé en ce que** la fonction de signalisation est une fonction de feux diurnes.

6. Véhicule (1) selon la revendication précédente, **caractérisé en ce que** l'angle de rotation de la deuxième (52) source lumineuse secondaire par rapport à la direction de ladite deuxième (52) source lumineuse quand le rayon de braquage du volant (V) est nul, varie de 0° à 8° quand l'angle de braquage du volant (V) varie de 0° à 360° tandis que l'angle de rotation de la troisième (53) source lumineuse secondaire par rapport à la direction de ladite troisième (53) source lumineuse quand le rayon de braquage du volant (V) est nul, varie de 0° à 15° quand l'angle de braquage du volant (V) varie de 0° à 540°, tandis que l'intensité de la première (51) source lumineuse varie de manière linéaire de 135 à 400 cd quand l'angle de braquage du volant (V) varie de 0° à 20°, que l'intensité lumineuse de la deuxième (52) source lumineuse varie de manière linéaire de 135 cd à 400 cd quand l'angle de braquage du volant (V) varie de 0° à 360° et que l'intensité lumineuse de la troisième (53) source lumineuse varie de manière linéaire de 135 cd à 400 cd quand l'angle de braquage du volant (V) varie de 0° à 540°.

## Patentansprüche

1. Fahrzeug (1) mit mindestens einer Hauptbeleuchtungsquelle (6) und mindestens einer zweiten (52) und einer dritten (53) benachbarten sekundären Lichtquelle, die jeweils Strahlen in bestimmten Hauptrichtungen erzeugen können, und einem Steuerorgan (OC), das die Lichtintensität jeder der zweiten (52) und der dritten (53) sekundären Lichtquelle in Abhängigkeit vom Einschlagwinkel des Lenkrads (V) des Fahrzeugs (1) steuern kann, wobei jede der zweiten (52) und dritten (53) sekundären Lichtquellen um eine Achse senkrecht zur Hauptausstrahlungsrichtung ihres Strahls drehbar gelagert ist und jeweils Lichtstrahlen entlang einstellbarer Hauptrichtungen aussendet; wobei die zweite und die dritte Lichtquelle Steuergesetze einhalten, die vom Steuerorgan (OC) sowohl hinsichtlich ihrer jeweiligen Lichtstärken als auch hinsichtlich ihrer jeweiligen Drehbereiche (β , γ) bestimmt werden, um ein homogenes und kontinuierliches Gesamtstrahlenbündel zu bilden, das durch Komplementarität ihrer Strahlenbündel erhalten wird, wenn sich das Fahrzeug (1) dreht, **dadurch gekennzeichnet, dass** sich die Drehwinkel des zweiten (52) und des dritten (53) Moduls linear und mit unterschiedlichen Drehgeschwindigkeiten in Abhängigkeit vom Lenkeinschlagwinkel des Lenkrads entwickeln ; wobei die zweite (52) und dritte (53) sekundäre Lichtquelle eine Signalfunktion erfüllen; wobei das zweite Modul (52) und das dritte Modul (53) unterschiedliche Winkelanschläge (β, γ) haben; wobei die Lichtintensität jeder der zweiten (52) und dritten (53) sekundären Lichtquellen durch das Steuerorgan (OC) gesteuert wird, um das vorgeschriebene photometrische Raster der Signallichtfunktion über alle Drehbereiche (β , γ) der zweiten (52) und dritten (53) sekundären Lichtquellen einzuhalten.

2. Fahrzeug (1) nach dem vorhergehenden Anspruch, **dadurch gekennzeichnet, dass** es außerdem mindestens eine erste (51) sekundäre Lichtquelle umfasst, die an die zweite (52) sekundäre Lichtquelle und an die Hauptlichtquelle (6) angrenzt und deren Intensität durch das Steuerorgan (OC) gesteuert wird, um zur Bildung des homogenen und kontinuierlichen Gesamtstrahls beizutragen, wenn sich das Fahrzeug (1) dreht, und um das von den Vorschriften für Signalleuchten geforderte Lichtstärke-Niveau in der Längsachse des Fahrzeugs (1) zu erfüllen.

3. Fahrzeug (1) nach dem vorhergehenden Anspruch, **dadurch gekennzeichnet, dass** die erste (51) Lichtquelle statisch ist, wenn das Fahrzeug (1) abbiegt.

4. Fahrzeug (1) nach dem vorhergehenden Anspruch, **dadurch gekennzeichnet, dass** die zweite (52) und dritte (53) Lichtquelle mit unterschiedlichen Geschwindigkeiten rotieren und unterschiedliche Winkelanschläge aufweisen und dass die Lichtstärke jeder ersten (51), zweiten (52) und dritten (53) Lichtquelle in ihren jeweiligen Hauptrichtungen entsprechend dem für Signalleuchten vorgeschriebenen photometrischen Raster eingestellt wird.

5. Fahrzeug (1) nach dem vorhergehenden Anspruch, **dadurch gekennzeichnet, dass** die Signalfunktion eine Tagfahrlichtfunktion ist.

6. Fahrzeug (1) nach dem vorhergehenden Anspruch, **dadurch gekennzeichnet, dass** der Drehwinkel der zweiten (52) sekundären Lichtquelle in Bezug auf die Richtung der zweiten (52) Lichtquelle, wenn der Wendekreis des Lenkrads (V) null ist, von 0° bis 8° variiert, wenn der Wendekreis des Lenkrads (V) von 0° bis 360° variiert, während der Drehwinkel der dritten (53) sekundären Lichtquelle in Bezug auf die Richtung der dritten (53) Lichtquelle, wenn der Wendekreis des Lenkrads (V) null ist, von 0° bis 8° variiert, von 0° bis 15° variiert, wenn der Lenkwinkel des Lenkrads (V) von 0° bis 540° variiert, während die Intensität der ersten (51) Lichtquelle linear von 135 bis 400 cd variiert, wenn der Lenkwinkel des Lenkrads (V) von 0° bis 20° variiert, dass die Lichtintensität der zweiten (52) Lichtquelle linear von 135 cd bis 400 cd variiert, wenn der Lenkwinkel des Lenkrads (V) von 0° bis 360° variiert, und dass die Lichtintensität der dritten (53) Lichtquelle linear von 135 cd bis 400 cd variiert, wenn der Lenkwinkel des Lenkrads (V) von 0° bis 540° variiert.

## Claims

1. Vehicle (1) comprising at least one main lighting source (6) and at least second (52) and third (53) adjacent secondary light sources, capable of generating respective beams in determined main directions, and a control member (OC) capable of controlling the light intensity of each of the second (52) and third (53) secondary light sources as a function of the steering angle of the steering wheel (V) of the vehicle (1), each of the second (52) and third (53) secondary light sources being rotatably mounted about an axis perpendicular to the main direction of emission of their beam, and respectively emitting light beams along adjustable main directions said second and third light sources respecting control laws determined by the control member (OC) both on their respective light intensities and on their respective rotation ranges (β, γ) in order to form a homogeneous and continuous overall beam obtained by complementarity of their beams when the vehicle (1) is turning, **characterized in that** the angles of rotation of the second (52) and third (53) modules evolve linearly and with different speeds of rotation, as a function of the steering angle of the steering wheel; the second (52) and third (53) secondary light sources fulfilling a signaling function; the second (52) and third (53) modules having different angular stops (β, γ); the light intensity of each of the second (52) and third (53) secondary light sources being controlled by the control member (OC) to respect the regulatory photometric grid of the signaling light function over all the ranges of rotation (β, γ) of the second (52) and third (53) secondary light sources.

2. Vehicle (1) according to the preceding claim, **characterized in that** it further comprises at least a first (51) secondary light source adjacent to the second (52) secondary light source and adjacent to the main lighting source (6), and whose intensity is controlled by the control member (OC) to contribute to the formation of the overall homogeneous and continuous beam when the vehicle (1) is turning and to comply with the level of luminous intensity required by the regulations for traffic lights in the longitudinal axis of the vehicle (1).

3. Vehicle (1) according to the preceding claim, **characterized in that** the first light source (51) is static when the vehicle (1) turns.

4. Vehicle (1) according to the preceding claim, **characterized in that** the second (52) and third (53) light sources rotate at different speeds and comprise different angular stops and **in that** the light intensity of each first (51), second (52) and third (53) light source, in their respective main directions, is adjusted according to the regulatory photometric grid for traffic lights.

5. Vehicle (1) according to the preceding claim, **characterized in that** the signaling function is a daytime running light function.

6. Vehicle (1) according to the preceding claim, **characterized in that** the angle of rotation of the second (52) secondary light source with respect to the direction of said second (52) light source when the steering radius of the steering wheel (V) is zero, varies from 0° to 8° when the steering angle of the steering wheel (V) varies from 0° to 360° while the angle of rotation of the third (53) secondary light source with respect to the direction of said third (53) light source when the steering radius of the steering wheel (V) is zero varies from 0° to 15° when the steering wheel (V) steering angle varies from 0° to 540°, while the intensity of the first (51) light source varies linearly from 135 to 400 cd when the steering wheel (V) steering angle varies from 0° to 20°, that the light intensity of the second light source (52) varies linearly from 135 cd to 400 cd when the steering wheel (V) steering angle varies from 0° to 360° and that the light intensity of the third light source (53) varies linearly from 135 cd to 400 cd when the steering wheel (V) steering angle varies from 0° to 540°.
